# FASCICULE DE BREVET EUROPEEN

(11) **EP 1 738 293 B1**
(45) Date de publication et mention de la délivrance du brevet: **26.12.2007**
(21) Numéro de dépôt: 05746721.9
(22) Date de dépôt: 13.04.2005
(51) Int. Cl.: G06K 1/00

(54) **PROCEDE DE COMMANDE DE LA TRAJECTOIRE D'UN VEHICULE**
VERFAHREN ZUR STEUERUNG EINER FAHRZEUGBAHN
METHOD FOR CONTROLLING THE TRAJECTORY OF A VEHICLE

(30) Priorité: 16.04.2004 FR 0403992
(43) Date de publication de la demande: 03.01.2007
(73) Titulaire: RENAULT TRUCKS, 69800 St Priest (FR); Renault S.A.S., Société par actions simplifiée, 92100 BOULOGNE BILLANCOURT (FR)
(72) Inventeur: GARNIER, Laurent, F-57180 Terville (FR); CLAEYS, Xavier, 75015 Paris (FR)
(74) Mandataire: Palix, Stéphane
(86) Numéro de dépôt international: PCT/FR2005/050234
(87) Numéro de publication internationale: WO 2005/106765

(56) Documents cités:
- US-A- 6 064 925
- US-B1- 6 301 532

## Description

### Domaine technique

L'invention concerne un système d'assistance de conduite pour des véhicules automobiles. Elle trouve une application particulière dans le secteur des véhicules industriels, et notamment des camions.

### Techniques antérieures

De façon générale, les systèmes de suivi de trajectoire automatisée peuvent fonctionner en utilisant les lignes tracées sur la chaussée pour définir les voies de circulation.

Ainsi, on connaît des systèmes d'assistance pour la conduite qui utilisent une ou plusieurs caméras destinées à surveiller la position des lignes situées de par et d'autre du véhicule lorsqu'il circule dans une voie déterminée. L'analyse des images élaborées par cette ou ces caméras permet de définir la position relative du véhicule par rapport à ces deux références. Cette position peut être comparée à une trajectoire théorique élaborée à partir des images des deux lignes tracées sur la chaussée. Cette trajectoire théorique se situe généralement sensiblement en position médiane par rapport aux deux lignes tracées sur la chaussée.

En jouant sur la commande de braquage du véhicule, il est ainsi possible de minimiser l'écart entre la trajectoire mesurée et la trajectoire théorique.

En pratique, un problème se pose lorsque l'une ou l'autre des lignes présente une discontinuité, ou disparaît. En effet, dans le cas où une seule ligne reste visible pendant une durée prédéterminée, le système d'assistance doit en tenir compte, et élaborer la commande de braquage uniquement à partir de l'information restante. En pratique, cette situation peut intervenir dans le cas d'interruption de marquage sur un côté de la chaussée, ou bien encore lorsque les lignes divergent, par exemple au niveau d'une bretelle d'entrée ou de sortie d'autoroute.

Dans le cas plus défavorable où les deux lignes de marquage au sol disparaissent, le système d'assistance doit maintenir une trajectoire cohérente et impérativement informer le chauffeur, par exemple par une alarme sonore, que ce dernier doit assurer manuellement la commande de braquage.

Un problème que se propose donc de résoudre l'invention est celui de la continuité de l'assistance au suivi de trajectoire en cas de perte d'une, voire même de deux repères fixes par rapport à la chaussée, constitués par les lignes de marquage au sol.

Par ailleurs, on connaît un autre système d'assistance au sujet de trajectoire qui est notamment utilisé pour faciliter le trafic, sous forme de convoi automatise de camions par exemple. Pour ce faire, le véhicule est équipé d'un système optique lui permettant d'acquérir une image du champ de vision orienté vers l'avant. Ce système permet d'acquérir des images des véhicules se déplaçant sur la chaussée. Ces véhicules peuvent être équipés de repères visuels, qui ont forme générale de cible, sensibles au rayonnement infrarouge par exemple. Il est également possible que la position du véhicule qui précède soit élaborée à partir d'une analyse d'image, fonctionnant donc en l'absence d'un quelconque dispositif implanté sur le véhicule qui précède. Il est ainsi possible d'évaluer de façon continue l'écart angulaire entre l'axe longitudinal médian du véhicule et la cible correspondante située sur le véhicule qui précède.

En prenant en compte les paramètres cinématiques du véhicule, il est ainsi possible de déterminer l'écart entre la trajectoire mesurée ou estimée, et la trajectoire théorique définie par les véhicules qui précèdent. On conçoit que cette technique de suivi est plus appropriée aux trajectoires à très faible courbure et à haute vitesse, tel qu'il en existe sur les voies rapides d'autoroutes.

En outre, un tel système est bien entendu inopérant lorsque les véhicules qui précèdent ne sont pas équipés de repères visuels, ou bien encore lorsque le véhicule considéré circule de manière isolée.

Le document US 6 064 925 décrit un procédé de commande de la trajectoire d'un véhicule qui résulte du choix entre différentes trajectoires théoriques. Une première de ces trajectoires théoriques évaluée à partir d'une mesure effectuée par la détection d'une ligne sur la chaussée. Une seconde trajectoire théorique est élaborée en référence à une cartographie, au moyen d'un gyroscope et d'un odomètre.

### Exposé de l'invention

L'invention concerne donc un procédé de commande de la trajectoire d'un véhicule, par la commande de son angle de braquage notamment.

Pour mettre en oeuvre ce procédé :
■ on élabore un premier critère représentatif de l'écart entre la trajectoire mesurée et estimée, et une trajectoire théorique définie par des repères fixes par rapport à la chaussée ;
■ on élabore un second critère représentatif de l'écart entre la trajectoire mesurée ou estimée, et une trajectoire théorique définie par des véhicules se déplaçant sur la chaussée ;
■ on combine de façon pondérée ces premier et second critères pour obtenir un critère global en vue de le minimiser, cette conversion étant apte à évoluer dynamiquement en fonction de l'évolution des deux critères.

Autrement dit, l'invention consiste à prendre en compte un critère mixte, obtenu par un mixage de deux informations de suivi de trajectoire qui sont de nature différente. La première de ces informations est relative à l'écart de la trajectoire par rapport à des repères fixes par rapport à la chaussée, que peuvent constituer les marquages au sol. Une autre de ces informations provient du suivi du véhicule précédent. La combinaison de ces deux informations se fait avec une pondération évolutive, de telle sorte que la contribution de chacun de ces deux paramètres peut varier dans le temps, en fonction de multiples paramètres.

Autrement dit, la commande de la trajectoire peut se faire de façon beaucoup plus fiable que dans les autres solutions existantes à ce jour, puisque deux paramètres sont pris en compte de façon combinée, avec la possibilité pour chacun de devenir prépondérant lorsque l'autre paramètre est inutilisable ou non significatif. On remarquera que la performance du système est dans le pire de cas identique à chacune des solutions prises isolement.

Ainsi, en pratique, lorsqu'un des écarts croît, notamment au-delà d'un seuil prédéterminé, son poids dans le critère global peut diminuer, de manière à donner plus d'importance au critère le plus stable.

De cette manière, il est possible de s'affranchir, ou à tout le moins de minimiser les divergences de l'un ou l'autre des paramètres, et ce de façon lissée, sans influence majeure sur la commande de suivi de trajectoire.

On peut également prévoir que le poids de l'un ou l'autre des critères dans le critère global soit annulé lorsque le critère considéré dépasse une valeur prédéterminée, indiquant qu'il n'est plus significatif. Tel est ainsi le cas lorsque l'on détecte une interruption des lignes de marquage au sol, ou la sortie du véhicule qui précède du champ de vision.

En pratique, le critère élaboré à partir de l'analyse de repères fixes par rapport à la chaussée peut prendre en compte deux séries de repères fixes, et notamment les lignes de marquage au sol présentes de chaque côté du véhicule. Toutefois, certains systèmes peuvent fonctionner en n'analysant qu'une seule ligne de marquage au sol.

Dans une forme plus particulière de réalisation, le poids de l'un ou l'autre des critères peut évoluer également en fonction des paramètres de vitesse du véhicule. Autrement dit, on peut privilégier l'un ou l'autre des critères selon que le véhicule circule rapidement ou non. Le poids de l'un ou l'autre des critères peut également évoluer en fonction de la variation de la courbure de la trajectoire théorique.

### Description sommaire des figures

La manière de réaliser l'invention, ainsi que les avantages qui en découlent ressortiront bien de la description du mode de réalisation qui suit, à l'appui des figures annexées dans lesquelles :
La figure 1 est une vue schématique de dessus d'une voie de circulation.
La figure 2 est un schéma illustrant la commande de suivi de trajectoire à partir des critères d'invention.

### Manière de réaliser l'invention

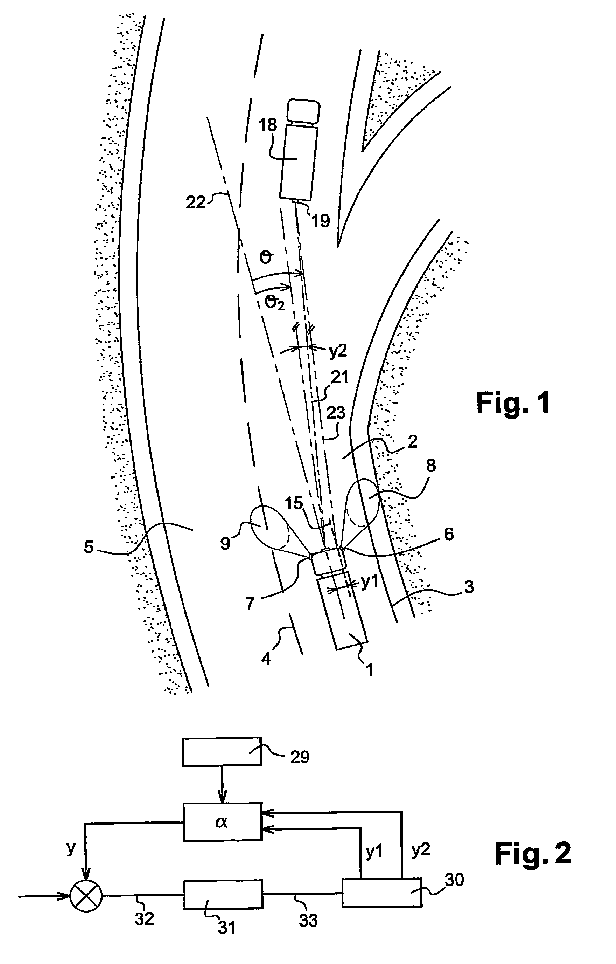

La figure 1 illustre une situation dans laquelle le véhicule (1) circule sur une voie (2) délimitée latéralement par deux lignes de marquage au sol (3, 4) dont l'une (4) sépare les deux voies de circulation (2, 5).

Conformément à l'invention, le véhicule permet d'équiper un système de caméra (6, 7) permettant de visualiser des champs de vision (8, 9) situés de part et d'autre du véhicule, légèrement en avant de ce dernier.

Un système de traitement d'images connu par ailleurs, et qui ne sera donc pas détaillé plus avant, permet d'analyser les images captées par les caméras (6, 7). Cette analyse permet d'élaborer le premier critère correspondant à l'écart entre la trajectoire réelle du véhicule, et la trajectoire théorique (15) représentée en ligne pointillée à la figure 1. Cette trajectoire (15) correspond sensiblement à une ligne située à équidistance des deux lignes de marquage au sol (3, 4).

Dans la forme illustrée, deux caméras (6, 7) sont employées pour réaliser cette analyse, mais l'invention couvre d'autres variantes dans lesquelles une seule caméra permet de visualiser simultanément les deux lignes de marquage au sol.

Complémentairement, le véhicule (1) est équipé d'un dispositif d'acquisition d'image (16), permettant de visualiser l'espace situé à l'avant du véhicule (1). Ce système permet notamment d'acquérir l'image d'un véhicule (18), roulant plus en avant, sur la même voie de circulation (2). Sur ce véhicule (18), est prévu un dispositif (19) constituant un point de repère suffisamment précis. Le dispositif d'acquisition (16) situé sur le véhicule (1) permet donc de déterminer l'angle formé entre la direction visée (21) de la cible, l'axe longitudinal médian (22) du véhicule.

Cet angle θ est comparé à l'angle θ₂ correspondant à l'angle que ferait la direction de visée (23) si le véhicule se trouvait sur la trajectoire théorique (15) évoquée précédemment.

L'écart Δθ = θ - θ₂ correspond au second critère utilisé dans la commande de suivi de trajectoire.

Un capteur de distance sonore non représenté permet également de déterminer la distance séparant le véhicule considéré du véhicule qui le précède (18) de manière à estimer l'écart latéral Y₂ du véhicule (1) par rapport à sa trajectoire théorique, à partir de l'écart angulaire Δθ. Pour évaluer cette distance, on peut également utiliser un radar, un lidar (pour Light Detection And Ranging: détection et télémétrie à l'aide de la lumière), ou simplement le système de vision qui permet de surveiller les lignes de marquage au sol.

Conformément à l'invention, les deux critères Y₁ et Y₂ correspondant aux écarts évoqués précédemment sont combinés de façon pondérée pour donner un critère global Y = α Y₁ + (1 - α) Y₂, utilisé pour la commande du braquage des véhicules.

Plus précisément, et comme illustré à la figure 2, les deux critères Y₁ et Y₂ résultent de la trajectoire estimée ou mesurée du véhicule. Ces critères Y₁ et Y₂ sont combinés de façon pondérée par le coefficient α évoqué précédemment. Conformément à l'invention, ce coefficient α peut évoluer dynamiquement en fonction de multiples causes ou évènements, dont les règles sont établies dans le bloc (29). Ainsi, dans le cas où le critère Y₁ devient trop important, dans le cas par exemple où le véhicule se trouve à l'aplomb d'une bretelle de sortie, le coefficient α est diminué, de manière à rendre plus prépondérant le critère Y₂ correspondant au suivi du véhicule précédent (18). De même, lorsque les véhicules circulent à très basse vitesse, les interruptions dont les marquages au sol discontinus peuvent faire en sorte que le critère Y₁ devient non significatif pendant les périodes de temps relativement importants, de sorte qu'il est préférable de tenir compte de la trajectoire du véhicule qui précède, et ce d'autant plus qu'il est supposé avoir une trajectoire stable.

A l'inverse, on peut prévoir de conserver un poids prépondérant du premier critère Y₁ lorsque le véhicule se trouve sur autoroute avec une trajectoire relativement rectiligne, et une bonne continuité de marquage au sol.

Ce critère global Y est utilisé pour élaborer la consigne (32) employée par le dispositif de pilotage de l'actionneur de braquage (31). L'angle de braquage (33) détermine alors par le modèle du véhicule (30), et les deux écarts (Y₁, Y₂) caractéristiques.

Dans un souci de simplification, le procédé de l'invention a été décrit dans la forme basique combinant deux critères, résultant de deux capteurs différents, mais il va de soi que le principe de l'invention peut être appliqué à un nombre plus élevé de critères, pondérés entre eux.

Il ressort de ce qui précède que le procédé de commande du braquage du véhicule conforme à l'invention présente l'avantage notable d'assurer une redondance des différences informations permettant de privilégier de façon dynamique deux modes de suivi de la trajectoire différents, ce qui améliore donc la sécurité. Ainsi, lorsque l'une des informations est bruitée, ou sans signification, le système assure automatiquement la prépondérance de l'autre information, en améliorant le confort du chauffeur.

## Revendications

1. Procédé de commande de la trajectoire d'un véhicule, au cours duquel :
■ on élabore un premier critère (Y₁) représentatif de l'écart entre la trajectoire mesurée ou estimée et une trajectoire théorique (15) définie par des repères fixes (3, 4) par rapport à la chaussée (2) ;
**caractérisé en ce que** :
■ on élabore un second critère (Y₂) représentatif de l'écart entre la trajectoire mesurée ou estimée, et une trajectoire théorique définie par des véhicules (18) se déplaçant sur la chaussée, et précédant le véhicule dont la trajectoire est commandée ;
■ on combine de façon pondérée les premier (Y₁) et second (Y₂) critères pour obtenir un critère global Y, en vue de le minimiser, la pondération (α) étant apte à évoluer dynamiquement en fonction de l'évolution des premier (Y₁) et second (Y₂) critères.

2. Procédé de commande selon la revendication 1, **caractérisé en ce que** le poids du premier (Y₁) ou second (Y₂) critère dans le critère global (Y) diminue lorsque ledit critère croît.

3. Procédé de commande selon la revendication 1, **caractérisé en ce que** le poids du premier (Y₁) ou second (Y₂) critère dans le critère global (Y) est annulé lorsque ledit premier (Y₁) ou second (Y₂) critère dépasse une valeur prédéterminée.

4. Procédé de commande selon la revendication 1, **caractérisé en ce que** le premier critère (Y₁) est élaboré à partir de l'analyse d'au moins deux séries (3, 4) de repères fixes par rapport à la chaussée.

5. Procédé de commande selon la revendication 1, **caractérisé en ce que** le poids α du premier et/ou du second critère évolue en fonction des paramètres de vitesse du véhicule.

6. Procédé de commande selon la revendication 1, **caractérisé en ce** le poids de l'un ou l'autre des critères évolue en fonction de la variation de la courbure de la trajectoire théorique.

## Claims

1. A method for controlling the trajectory of a vehicle wherein:
- one produces a first criterion (Y₁) representative of the difference between the measured or estimated trajectory and a theoretical trajectory (15) defined by fixed identification marks (3, 4) associated with the carriageway (2);
**characterised in that**:
- one produces a second criterion (Y₂) representative of the difference between the measured or estimated trajectory and a theoretical trajectory defined by vehicles (18) moving over the carriageway ahead of the vehicle, the trajectory of which is controlled;
- one weightedly combines the first criterion (Y₁) and the second criterion (Y₂) in order to obtain an overall criterion Y so as to minimise the latter, the weighting (α) being capable of changing dynamically depending on changes in the first criterion (Y₁) and the second criterion (Y₂)

2. A method for controlling as claimed in claim 1, **characterised in that** the weight of the first criterion (Y₁) or second criterion (Y₂) in the overall criterion (Y) reduces when said criterion increases

3. A method for controlling as claimed in claim 1, **characterised in that** the weight of the first criterion (Y₁) or second criterion (Y₂) in the overall criterion (Y) is cancelled when said first criterion (Y₁) or second criterion (Y₂) exceeds a predetermined value.

4. A method for controlling as claimed in claim 1, **characterised in that** first criterion (Y₁) is produced by analysing at least two series (3, 4) of fixed identification marks associated with the carriageway.

5. A method for controlling as claimed in claim 1, **characterised in that** the weight α of the first and/or second criterion changes depending on the vehicle's speed parameters.

6. A method for controlling as claimed in claim 1, **characterised in that** the weight of either of the criteria changes depending on the curve of the theoretical trajectory.

## Patentansprüche

1. Verfahren zur Steuerung des Wegs eines Fahrzeugs, in dessen Verlauf:
■ ein erstes Kriterium (Y₁) ausgearbeitet wird, das repräsentativ für die Abweichung zwischen dem gemessenen oder geschätzten Weg und einem theoretischen Weg (15) ist, der durch feste Bezugspunkte (3, 4) in Bezug auf die Fahrbahn (2) definiert wird;
**dadurch gekennzeichnet, dass**:
■ ein zweites Kriterium (Y₂) ausgearbeitet wird, das repräsentativ für die Abweichung zwischen dem gemessenen oder geschätzten Weg und einem theoretischen Weg ist, der durch Fahrzeuge (18) definiert wird, die sich auf der Fahrbahn bewegen und dem Fahrzeug voranfahren, dessen Weg gesteuert wird;
■ das erste (Y₁) und zweite (Y₂) Kriterium auf gewichtete Weise kombiniert werden, um ein Gesamtkriterium (Y) zu erhalten, um es zu minimieren, wobei die Gewichtung (α) geeignet ist, sich dynamisch in Abhängigkeit von der Veränderung des ersten (Y₁) und zweiten (Y₂) Kriteriums zu verändern.

2. Steuerungsverfahren nach Anspruch 1, **dadurch gekennzeichnet, dass** das Gewicht des ersten (Y₁) oder zweiten (Y₂) Kriteriums im Gesamtkriterium (Y) abnimmt, wenn das Kriterium ansteigt.

3. Steuerungsverfahren nach Anspruch 1, **dadurch gekennzeichnet, dass** das Gewicht des ersten (Y₁) oder zweiten (Y₂) Kriteriums im Gesamtkriterium (Y) annulliert wird, wenn das erste (Y₁) oder zweite (Y₂) Kriterium einen vorbestimmten Wert übersteigt.

4. Steuerungsverfahren nach Anspruch 1, **dadurch gekennzeichnet, dass** das erste Kriterium (Y₁) ausgehend von der Analyse von mindestens zwei Serien (3, 4) von festen Bezugspunkten in Bezug auf die Fahrbahn ausgearbeitet wird.

5. Steuerungsverfahren nach Anspruch 1, **dadurch gekennzeichnet, dass** sich das Gewicht (α) des ersten und/oder zweiten Kriteriums in Abhängigkeit von den Geschwindigkeitsparametern des Fahrzeugs verändert.

6. Steuerungsverfahren nach Anspruch 1, **dadurch gekennzeichnet, dass** sich das Gewicht des einen oder des anderen der Kriterien in Abhängigkeit von der Veränderung der Krümmung des theoretischen Wegs verändert.
